# EUROPEAN PATENT APPLICATION

(11) **EP 2 360 435 A1**
(43) Date of publication of application: **24.08.2011**
(21) Application number: 10153362.8
(22) Date of filing: 11.02.2010
(51) Int. Cl.: F24D 3/00, F24D 11/00, F03D 9/00, F03D 9/02

(54) **A heating system and method using alternative energy for heating buildings**

(71) Applicant: Leidi Consult Ltd., 60534 Vahi küla, Tartu vald (EE)
(72) Inventor: Hanikat, Eero, 60503 Tartu maakond (EE)
(74) Representative: Sarap, Margus

(57) **Abstract**

The present invention relates to a building heating system, in particular to an ion heating system for heating buildings, and the use of electrical energy produced by alternative energy sources (solar, wind, and hydro energy) for starting up the ion boiler. The ion heating system contains an ionising boiler, primary heating circuit, secondary heating circuit, automatics required to control the system, and electrodes within the ion heating boiler, whereas the heating system additionally comprises a solar heating system containing solar panels, solar heating boiler and control automatics, and a wind generator connected directly to the heating equipment of the ion heating system so that the electricity generated by the wind generator is directly, without stabilising and inverting, conducted to the heating equipment.

## Description

### Technical Field

The present invention relates to a building heating system, in particular to an ion heating system for heating buildings, and the use of thermal and electric energy produced by alternative energy (solar, wind, and hydro energy) sources for starting up the ionising boiler. The invention further relates to the use in the above-mentioned ion heating system of electric current that is neither stabilised nor converted.

### Background Art

Different heating systems are known in the prior art for heating buildings (such as private houses, apartment blocks, office buildings, warehouses, etc.) with central heating systems for which the required thermal energy is produced by burning gas, heating oil and other fossil fuels and biofuels (such as timber, woodchips, etc.) and by converting the energy obtained from burning into water thermal energy, for instance. In these heating systems, hot water is conducted into the heating systems either centrally or locally. Main drawback of known systems is that they pollute the environment with hazardous burning products, especially with carbon dioxide or, in other words, with greenhouse gases.

It is known the heating systems in which electricity produced in power plants and transmitted to consumers through connection piping is used to heat water by electrical heater of the heating system and the heated water is then conducted into the system. These systems as well suffer from the disadvantage of emitting burning residues (greenhouse gases) produced by burning fossil fuels in power plants, whereas the amount of greenhouse gases produced by huge power plants is considerably larger than that of local boiler houses. In addition, the cost of transmission of electrical energy over long distances is huge - it may even reach about 50% of the cost of producing electricity and therefore, local suppliers of the electrical power are preferred. Hydroelectric plants of high capacity, wind electrical plants and solar energy plants provide an alternative but their common problem is expensive transmission and also costs of stabilising the produced electrical energy. It is known that the electrical energy transmitted to transfer systems is stabilised with frequencies of 50 Hz or 60 Hz, for example, and voltages of 220-240 V or 380-400 V.

lonheatsystem LEIDI disclosed in the publication U200700004 of 15 July 2008 provides an alternative solution to central heating systems. The said ion heating system is a universal central heating system suitable for installing in both radiator as well as floor heating systems or for storage and direct heating; it may also serve as a source of electrical energy for ventilation assemblies and hot water supply - in terraced houses or one-family homes, in apartments or blocks of flats, in public buildings or production facilities.

The energy source of the lonheatsystem LEIDI heating system is electricity and its functioning principle comprises of electricity moving through the heat carrier that circulates in the system. Thus, thermal energy is generated directly within the heat carrier, the system does not suffer heat losses and there are no transmission factors to be taken into account. All of the consumed energy is transformed into thermal energy and used to heat the building. The system is controlled by digital automatics which has various extension options.

The existing lonheatsystem LEIDI versions employ two heating circuits - one of them is used via a two-system boiler for hot water supply and the other for heating the building.

Everything needed for starting up the heating system has been installed within the housing of the system with small dimensions - width 800 mm, height 800 mm, depth 300 mm (ver. 4.2) and width 450 mm, height 1450 mm, depth 450 mm (ver. 5.0) - and there is no need for constructing a separate boiler house. The mixer module connected with the system ensures an even functioning of both radiator heating and floor heating. A primary heating circuit ensures heating of hot consumption water by means of a two-system boiler.

The heating system is filled with a special freeze-proof heat carrier providing better heat exchange and higher efficiency of the system. By reducing the formation of corrosion and lime scale, the longevity of all components of the heating system is ensured.

All the above-mentioned factors guarantee an optimum use of energy - the average heating expenses for the heating season are in the range of 4-10 kWh per square metre, depending on the thermal insulation of the building. For example, the heating expenses of a 205 m² dwelling house at the address Koivulaakso tie 170, Porvoo, Finland, are 55 euros per month as an average across the year.

### Summary of invention

The object of the present invention is to develop new generation versions of the earlier ion heating system lonheatsystem LEIDI® designed by the applicant, the lonheatsystem LEIDI® IONWIND®, LEIDI SOLALRIS®, wherein sources of alternative energy, such as wind generators, local hydro energy generators, solar energy storage systems, etc. are used as the source of electrical energy.

A further object of the present invention is to provide a building heating system wherein the ion heating system employs only alternative energy produced by relevant equipment and wherein the produced electrical energy is completely consumed without any considerable expenses arising out of transmission, stabilisation and converting. The wind generator and hydro generator produce electric current of different voltage (0-600 V) and frequency (0-200 Hz), the immediate use of which in household or industrial equipment is impossible without stabilising and converting. However, the cost of the equipment used for stabilisation and conversion may total almost a half of the price of the installations and the loss of energy in the process of providing usable parameters to the produced energy may also be huge.

A yet further object of the present invention is to provide an application for the lonheatsystem LEIDI using electrical energy that is neither converted nor stabilised, which so far has not been employed because the parameters of electric current fluctuate within a considerably wide range. A further object of this additional application is to reduce substantially the costs of installations using unconverted and unstabilised electric current and losses arising from conversion and stabilisation.

In order to achieve a more stable system, new technical solutions are provided for some lonheatsystem LEIDI® systems by incorporating into the equipment heat storage and compensation tanks.

To that end, an additional heat exchanger has been connected to the device that avoids mixing of the liquids carrying heat and circulating in the first and the second circuit and thus prevents the abrasive particles from getting into the ionising boiler, at the same time ensuring an optimal heat exchange and heating of the building.

The most significant improvement provided in the present invention is the direct connection of the ion heating system lonheatsystem LEIDI with the energy source producing alternative energy, i.e. electricity generated, for example, by a wind generator is transmitted to the electrodes of the ionising boiler of the heating system without stabilising and converting it first. It means that the parameters of electric current - frequency, voltage - are of no significance any more which provides a major economy in the use of the produced energy. Considering the efficiency of different equipment, losses suffered in the process of stabilisation and conversion of electrical parameters reach 20 to 40 per cent of the produced energy.

A yet further object of the present invention is to develop a heating system functioning fully on alternative energy and reducing thereby substantially global CO₂ emission. Producing 2.85 MWh of electrical energy generally releases about 1 ton of CO₂. By producing about 33,000 kWh or 33 MWh, which is a yearly consumption of a private house, from alternative energy sources, it is possible to reduce carbon dioxide emission by 11.5 tons a year. The technology provided by the present invention offers major benefits to the owners of private houses, apartment associations, owners and holders of public and industrial buildings, governmental and international organisations. The use of the present invention is especially significant in secluded areas and in places affected by extreme weather conditions.

### Brief description of drawings

In the following description, the technical solution of the present invention for a building heating system using ion heating system lonheatsystem LEIDI will be disclosed with the reference to figures wherein:

Figure 1 illustrates an ion heating system for buildings that is connected to a regular transmission grid and which comprises an additional application using solar energy;

Figure 2 illustrates a building heating system which comprises an ion heating system and which has a application emploing solar energy and a device producing wind energy with stabilisation devices added to it, whereas the system is connected with distributive transfer system;

Figure 3 illustrates a building heating system according to the present invention wherein the ion heating system equipment has an additional application for emploing solar energy and a system for producing wind energy together with stabilisation devices and energy storage equipment, whereas the system is not connected with distributive transfer system;

Figure 4 illustrates a building heating system wherein the ion heating system equipment has an additional application for emploing solar energy and a system for producing wind energy without stabilisation devices and the system uses electric current that is not stabilised, whereas the system is not connected with distributive transfer system;

Figure 5 illustrates the building heating system according to Figure 4 which has additional accumulation equipment for storing energy;

Figure 6 illustrates a house, public and business building heating system wherein the ion heating system equipment has an additional application for emploing solar energy and a system for producing wind energy without stabilisation devices and the system uses electric current that is not stabilised, whereas the system is not connected with distributive transfer system;

Figures 7a-e illustrates diagrammatically an ion heating system according to present invention which functions on direct current and which either is or is not connected with the external power grid;

Figures 8a-e represent diagrammatically an ion heating system according to present invention which is supplied with alternating current and which either is or is not connected with the external power grid;

Figure 9 represents various electrical connection diagrams for both direct and alternating current of an ion heating system using exclusively alternative energy.

### Description of embodiments

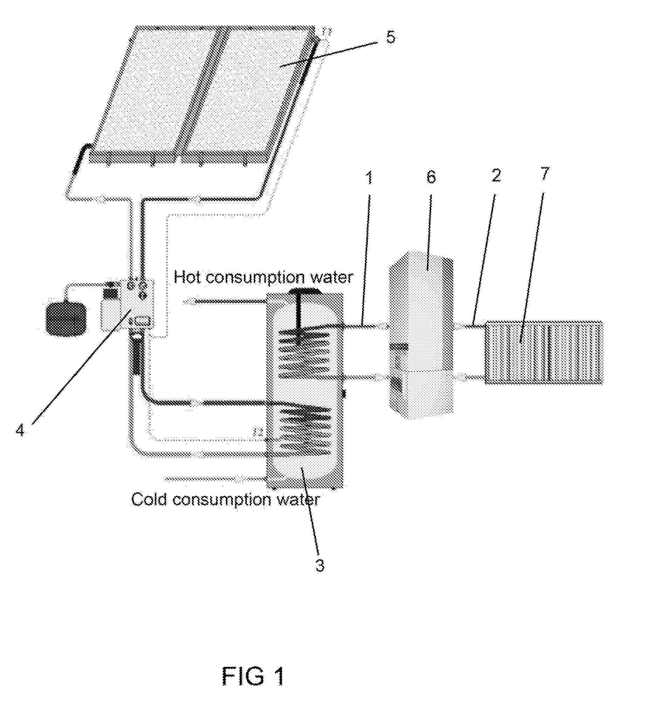

Figure 1 shows an ion heating system which has been developed earlier by the applicant and which comprises an ionising boiler 6 of lonheatsystem LEIDI containing a first heating circuit 1 and a second heating circuit 2. The first circuit 1 is designed with preference for heating consumption water and the second circuit 2 is designed for heating the liquid circulating in the heating system 7 of a building. In addition, the system comprises a solar heating boiler 3, solar panels 5 and a solar heating control panel 4 that is used to control the circulation in the system of the heated liquid conducted from the system producing solar energy into the common system. The first heating circuit 1 of the ionising boiler 6 and a solar heating circuit are connected to the solar heating boiler 3. Consumption water that is heated with the warmed up heating liquid circulating in the first heating circuit of the ionising boiler 6 and the warmed up heating liquid circulating in the solar heating circuit flows through the boiler 3. Both heating circuits are closed circuits so that in the boiler, consumption water does not come into contact with the heating liquid circulating in the said heating circuits. The ion heating system depicted in Figure 1 follows the principle that most of the energy needed to warm up consumption water is generated by solar heating system and when, for instance, consumption increases and additional energy is needed, it is provided by the first circuit of the ion heating system.

However, the system can also function the other way round, i.e. the warmed up liquid provided by solar panels is used to heat both the consumption water circulating in the first or, in other words, consumption water circuit and also the heating system liquid circulating in the heating system of the building. In this way, the heating equipment of the lonheatsystem LEIDI and the system converting solar energy into thermal energy support and support each other in compliance with heating needs and current capacity of the alternative energy.

The use of the said additional energy in the heating of consumption water is controlled by the solar heating control panel 4. The ionising boiler 6 of the ion heating system is connected in the known manner with the electrical energy transmission system in which electricity has specified characteristics - frequency of either 50 or 60 Hz, voltage of 380 - 400V, 210-240 V or 110-130 V.

In addition, the system also comprises control automatics, pumps and three-system boilers. The described lonheatsystem LEIDI allows optimising the expenses on heating and hot water supply by up to 50%.

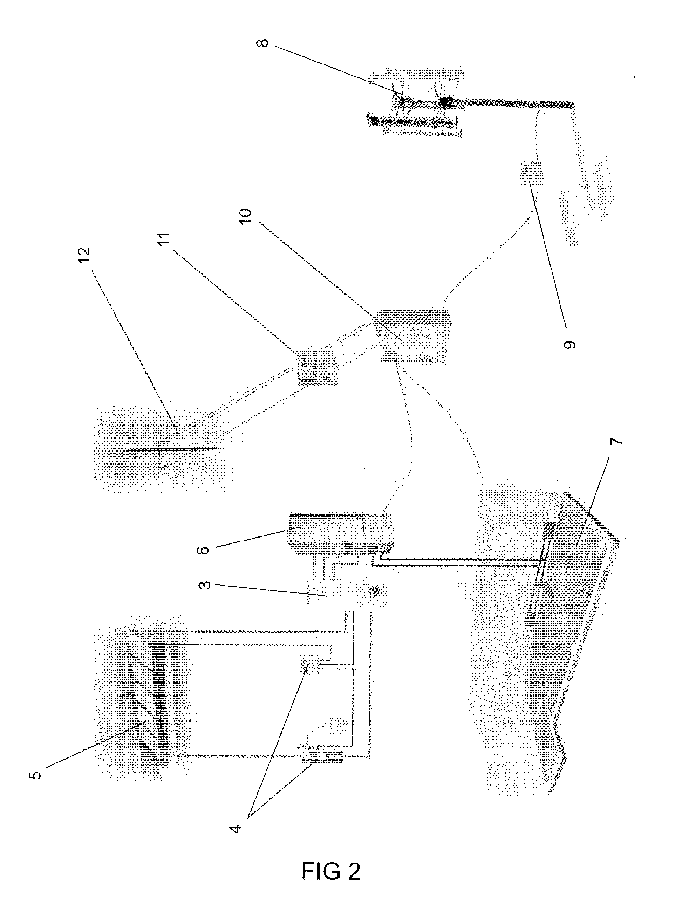

An improvement to the ion heating system according to Figure 1, which is one of the objects of the present invention, is represented in Figure 2 which is one of the objects of the invention - use of the alternative energy in the heating systems. The said improvement is a further development of the present invention and it comprises a building heating system which apart from a solar heating system includes additional equipment for producing alternative energy, such as a wind generator 8 with a controller 9 designed for controlling the wind generator. The electrical energy produced by the wind generator 8 is stabilised and inverted by means of the grid inverter 10. Inverted electricity is used to meet the demand for heating: generating the necessary thermal energy with the ion heating system equipment 6; power supply for lightning; household appliances and other devices needing electricity; overproduced renewable energy is exported to the distriputive power grid 12 through the electricity meter 11. The connection is a so-called "in grid" connection or connection with the distributive network (external power grid) by a technical solution. In such system, the green thermal energy produced by solar heating system is primarily employed for heating consumption water by means of the ion heating system equipment, whereas the remaining energy is used for heating the building.

The development of the building heating system is a "off grid" system or a system producing all of the energy independently and standing apart from external networks, in which
- the green thermal energy produced by solar heating is, by using a means of the ion heating system equipment, first directed to heating of consumption water, whereas the remaining energy is used for heating the building;
- electrical energy produced by the wind generator is stabilised and inverted;
- inverted electrical energy is used for meeting the demands of equipment not connected to the external network: required thermal energy is generated by the ion heating system equipment and appliances not connected with external networks are supplied;
- the overproduced renewable energy is stored in accumulators.

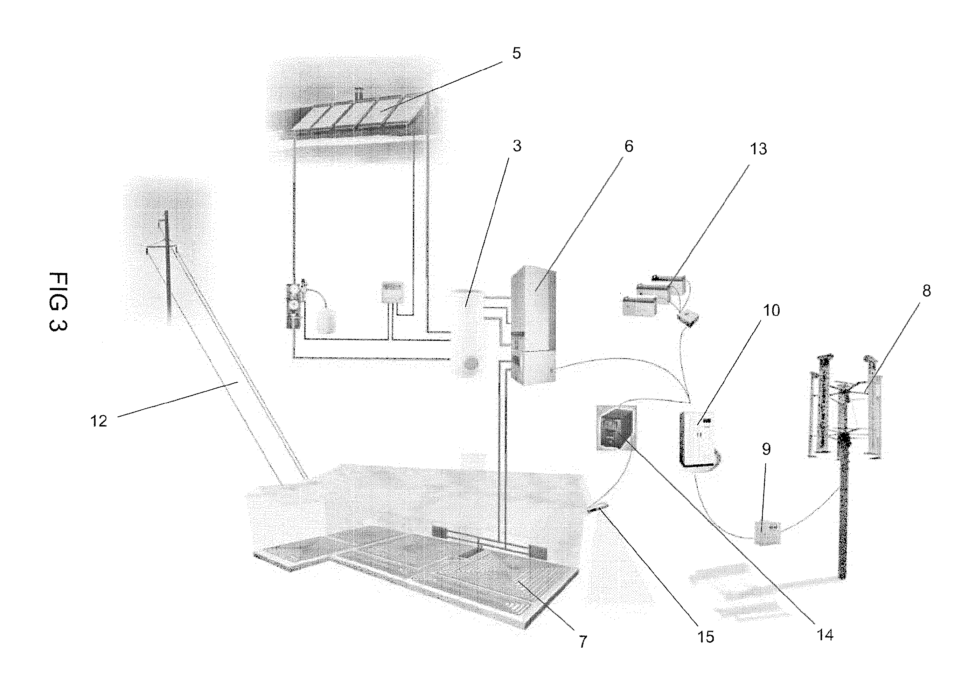

The above description is shown in Figure 3 wherein electrical energy produced by the wind generator 8 is inverted with the inverter 10 and is used in the ionising boiler 6 of the ion heating system. Excessively produced energy is stored in accumulators 13 and part of the alternative energy produced by the wind generator is directed into the common consumption system of the building, such as external lightning 15, through the UPS device 14.

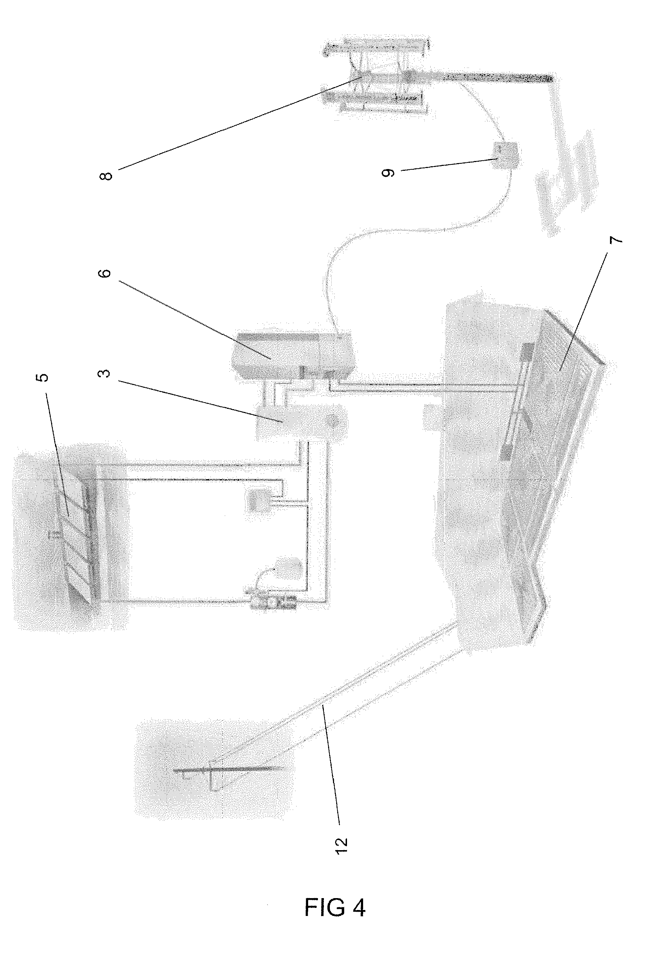

The technical solution best representing the objects of the present invention is shown in Figure 4, with the connection "no grid" which means that electrical energy is directly conducted into the heating equipment of the ion heating system. In said system, energy is distributed as follows:
- the green thermal energy produced by solar heating is, by using a means of the ion heating system equipment, first directed to heat consumption water, and the remaining energy is used for heating the building;
- electrical energy produced by the wind generator 8 is neither stabilised nor inverted;
- the produced green electricity is directly conducted into the equipment of the ion heating system to be used for producing necessary thermal energy, thus ensuring the conversion of alternative renewable energy into thermal energy without any losses.

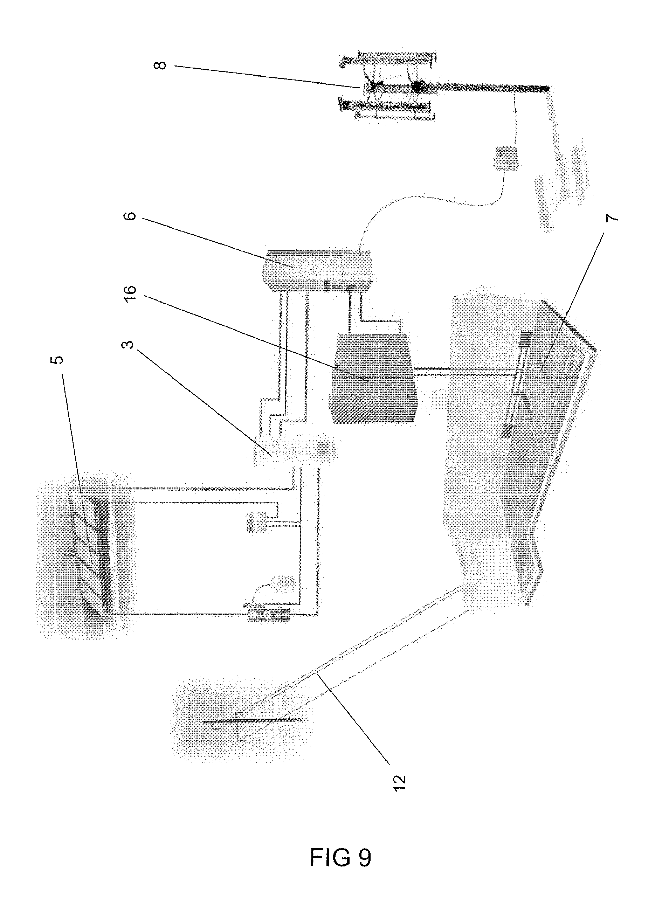

The heating system (Figure 4) in which the produced energy is stored or which uses the so-called "no grid" store connection provides an alternative to the heating system with direct connection shown in the above Figure 5.
In said system:
- the green thermal energy produced by solar heating is, by using a means of the ion heating system equipment, first directed to heat consumption water, and the remaining energy is used for heating the building;
- the excessive energy produced by solar heating is stored in the storage tank 16;
- electrical energy produced by the wind generator 8 is neither stabilised nor inverted;
- produced green energy is directly conducted into the equipment of the ion heating system to be used for producing necessary thermal energy, thus ensuring the conversion of alternative renewable energy into thermal energy without any losses;
- said overproduced renewable energy is stored in the storage tank 16 as thermal energy.

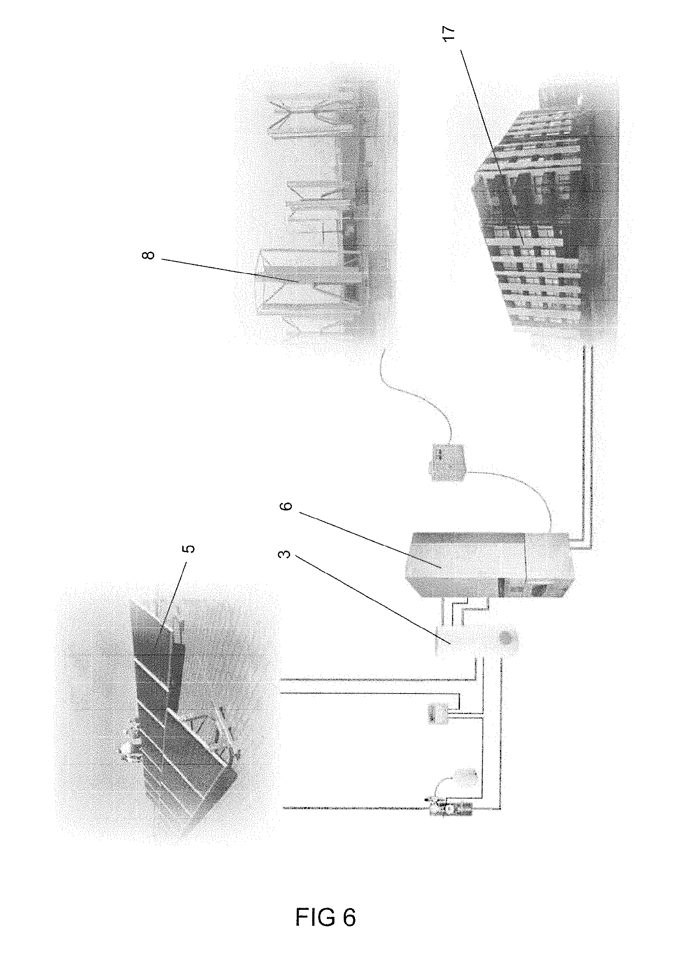

Another alternative heating system solution is a direct connection to the heating equipment of the ion heating system in buildings requiring high capacity (shown in Figure 6), in which
- the green thermal energy produced by solar heating panels is, by using a means of the ion heating system equipment, first directed to heat consumption water, and the remaining energy is used for heating the objects 17;
- the excessive energy produced by solar heating is stored in the storage tank, if applicable;
- electrical energy produced by the wind generator is neither stabilised nor inverted;
- produced green energy is conducted into the ion heating system to be directly used for producing necessary thermal energy, thus ensuring the conversion of alternative renewable energy into thermal energy without any losses;
- said overproduced renewable energy is stored in the storage tank as thermal energy, if applicable.

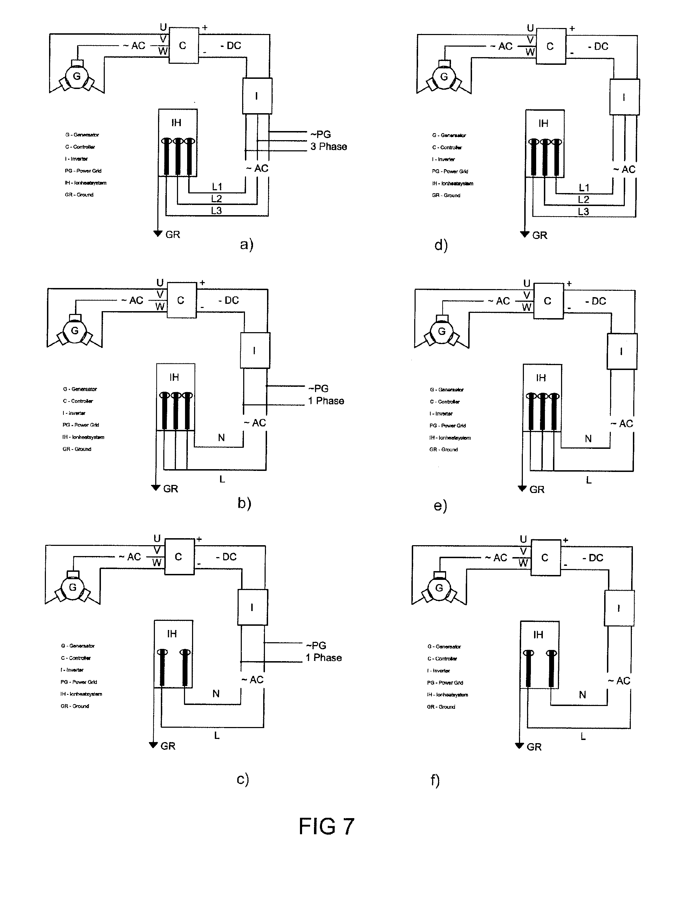

In the above technical solutions, different electric connection diagrams for the consumption of direct as well as alternating current are employed. Figures 7 a-c represent an ion heating system and a wind generator having a diagram of the three-phase connection with the general distributive transmission grid. The direct current generated by the wind generator is inverted with the inverter into the three-phase alternating current. Figures 7d-f show an ion heating system which is not connected to an external transmission grid and in which the wind generator is through a controller connected to an inverter in which the direct current generated by the wind generator is converted into alternating current. Alternating current is then used to start up the ionising boiler of the ion heating system.

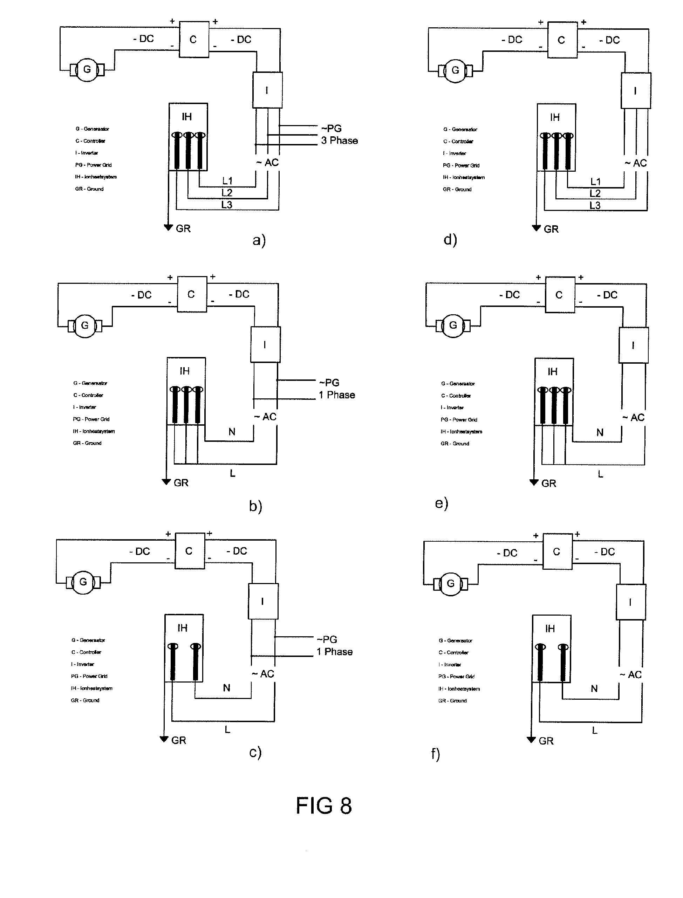

Figure 8 represents an electric circuit that resembles that of the ion heating system shown in Figure 7, whereas the wind generator generates alternating current which is then conducted through a controller to the inverter in which the parameters of alternating current are harmonised with that of the external distributive transmission grid. Figures 8a-c show the diagram of the ion heating system connected to the external transmission grid. Figures 8d-f show the same solution wherein the ion heating system is switched off the external distributive transmission grid, i.e. the heating system functions independently and uses only alternative energy.

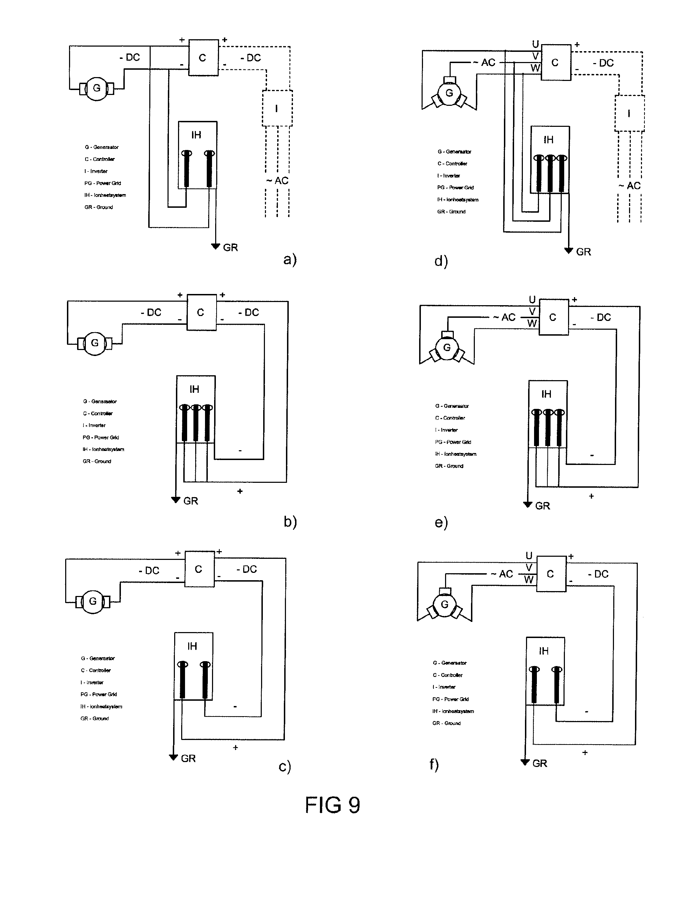

Figures 9a-f show the connection scheme of the technical solution that is closest to the objects of the present invention. Figures 9a-c illustrate a connection scheme of a system in which the wind generator produces direct current, whereas Figures 9d-f show a connection scheme of the ion heating system in which the wind generator produces alternating current. In schemes fig 9 a and d, the most significant aspect of the present invention is the fact that the electrical energy generated by the wind generator is directly conducted into the ionising boiler of the ion heating system, i.e. the characteristics of current have not been transformed or stabilised. In schemes fig 9b, c, e and f, the most significant aspect of the present invention is the fact that the electrical energy generated by the wind generator is conducted into the ionising boiler of the ion heating system as stabilised direct current. The described solution makes the functioning of the system extremely efficient and allows using alternative energy without significant losses that usually arise from inversion of electric energy and conversion of frequencies.

In Figures 7-9, the following abbreviations have been used: G - Generator, C - Controller, I - Inverter, PG - Power Grid, IH - lonheatsystem, GR - Ground.

## Claims

1. A building heating system which comprises an ion heating system containing an ionising boiler, primary heating circuit, secondary heating circuit, automatics required to control the system, and electrodes within the ion heating boiler, **characterised in that** the heating system additionally comprises a solar heating system containing solar panels, solar heating boiler and control automatics, and a hydro or a wind generator connected directly to the heating equipment of the ion heating system so that the electrical energy generated by the wind generator is conducted to the heating equipment without stabilising and inverting.

2. A building heating system according to claim 1, **characterised in that** the solar heating system additionally comprises a storage tank in which the renewable energy overproduced in the solar heating system is stored.

3. A building heating system according to claims 1 or 2 **characterised in that** the building heating system additionally comprises a storage tank in which renewable energy overproduced in the whole heating system is stored.

4. A building heating system according to claims 1, 2 or 3, **characterised in that** the heating system comprises a grid connect inverter to which the external distributive transmission network is connected and by which the overproduced stabilised and inverted electrical energy is directed to the general transmission grid.

5. A building heating system according to the claims 1, 2, 3 or 4, **characterised in that** the heating system comprises a grid connect inverter which is not connected to the external distributive transmission network and by which the overproduced stabilised and inverted electrical energy is directed to the internal use of the building and stored in the storage batteries.

6. A method for heating buildings wherein the heating system comprises an ion heating system, solar heating system and wind generator, wherein the renewable energy overproduced by the solar heating system is stored in a storage tank, and wherein the electricity produced by the wind generator is directly, without stabilising and inverting, conducted to the heating equipment of the ion heating system.
